# EUROPEAN PATENT APPLICATION

(11) **EP 4 636 060 A1**
(43) Date of publication of application: **22.10.2025**
(21) Application number: 24766842.9
(22) Date of filing: 16.02.2024
(51) Int. Cl.: C10M 105/34, C09K 5/10, C10N 20/00, C10N 40/00, C10N 40/04, C10N 40/25

(54) **COOLING OIL COMPOSITION AND COOLING SYSTEM**

(30) Priority: 09.03.2023 JP 2023036803
(71) Applicant: ENEOS Corporation, Chiyoda-ku Tokyo 100-8162 (JP)
(72) Inventor: OKAMURA Moeka, Tokyo 100-8162 (JP); TADA Akira, Tokyo 100-8162 (JP); AIDA Fuyuki, Tokyo 100-8162 (JP)
(74) Representative: Grünecker Patent- und Rechtsanwälte PartG mbB
(86) International application number: PCT/JP2024/005607
(87) International publication number: WO 2024/185471

(57) **Abstract**

A cooling oil composition is disclosed. The cooling oil composition contains a base oil containing a compound represented by General Formula (1) below. 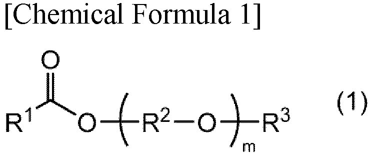 In Formula (1), m represents an integer from 2 to 6. R¹ represents an alkyl group having 1 to 8 carbon atoms or an alkenyl group having 2 to 8 carbon atoms. R² represents an alkylene group having 1 to 4 carbon atoms. A plurality of R² groups may be the same as or different from each other. R³ represents a hydrogen atom, an alkyl group having 1 to 8 carbon atoms, or a -(CO)R⁴ group. R⁴ represents an alkyl group having 1 to 8 carbon atoms or an alkenyl group having 2 to 8 carbon atoms.

## Description

### Technical Field

The present invention relates to a cooling oil composition and a cooling system.

### Background Art

In recent years, in the field of automobiles, efforts have been made to develop fuel-saving technologies, and the spread of hybrid vehicles and electric automobiles (hereinafter may be referred to as "electric vehicles"), which are automobiles excellent in fuel efficiency and environmental performance, has been promoted. A device for an electric vehicle provided in an electric vehicle requires a cooling oil excellent in cooling performance and electrical insulation properties. In addition, since some electric vehicles have a gear reducer, the cooling oil is required to have low-temperature fluidity in addition to the above performance. In addition, the cooling oil is also required to be excellent in safety, particularly a sufficiently high flash point.

As such a cooling oil, a lubricating oil composition (cooling oil composition) containing one or more kinds of synthetic oils selected from the group consisting of a polyalkylene glycol having a predetermined constituent unit and a polyvinyl ether having a predetermined constituent unit is known (see, for example, Patent Literature 1).

### Citation List

### Patent Literature

Patent Literature 1: WO 2022/045050 A1

### Summary of Invention

### Technical Problem

However, conventional cooling oil compositions do not have high levels of cooling performance, electrical insulation properties, low-temperature fluidity, and safety.

Therefore, a main object of the present invention is to provide a cooling oil composition having cooling performance, electrical insulation properties, low-temperature fluidity, and safety at high levels.

### Solution to Problem

As a result of intensive studies to solve the above problems, the present inventors have found that a cooling oil composition containing a compound having a predetermined structure as a base oil has high levels of cooling performance, electrical insulation properties, low-temperature fluidity, and safety, and have completed the present invention.

The present invention provides cooling oil compositions of [1] to [3] and a cooling system of [4].
[1] A cooling oil composition containing a base oil containing a compound represented by General Formula (1) below. 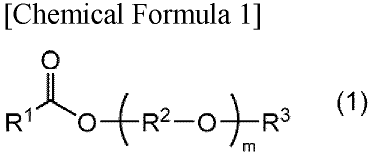
   In Formula (1), m represents an integer from 2 to 6.
   R¹ represents an alkyl group having 1 to 8 carbon atoms or an alkenyl group having 2 to 8 carbon atoms.
   R² represents an alkylene group having 1 to 4 carbon atoms. A plurality of R² groups may be the same as or different from each other.
   R³ represents a hydrogen atom, an alkyl group having 1 to 8 carbon atoms, or a -(CO)R⁴ group. R⁴ represents an alkyl group having 1 to 8 carbon atoms or an alkenyl group having 2 to 8 carbon atoms.
[2] The cooling oil composition according to [1], in which m is 2, and R² is an ethylene group.
[3] The cooling oil composition according to [1] or [2], used for cooling a device for an electric vehicle.
[4] A cooling system for cooling a device for an electric vehicle, including the cooling oil composition according to [1] or [2].

The present invention may also relate to the use (application) of a composition as a cooling oil or the use (application) for the production of a cooling oil, in which the composition contains a base oil that contains a compound represented by General Formula (1). Here, the cooling oil may be a cooling oil for a device for an electric vehicle.

### Advantageous Effects of Invention

The present invention provides a cooling oil composition having a high level of cooling performance, electrical insulation properties, low-temperature fluidity, and safety. Further, the present invention provides a cooling system using such a cooling oil composition.

### Description of Embodiments

Hereinafter, embodiments of the present invention will be described in detail. However, the present invention is not limited to the following embodiments.

In the present specification, a numerical range indicated using "to" indicates a range including the numerical values located before and after "to" as the minimum value and the maximum value, respectively. In the numerical ranges described in stages in the present specification, the upper limit value or the lower limit value used in one numerical range may be replaced with the upper limit value or the lower limit value of another numerical range described in stages. In the numerical range described in the present specification, the upper limit value or the lower limit value of the numerical range may be replaced with a value shown in examples.

In the present specification, the materials exemplified below may be used singly, or may be used in combination with two or more thereof as long as conditions are met, unless otherwise specified. When there is a plurality of substances corresponding to each component, the content of each component refers to the total amount of the plurality of substances unless otherwise specified.

### [Cooling Oil Composition]

A cooling oil composition according to one embodiment contains a base oil. The cooling oil composition can also be referred to as a lubricating oil composition.

### <Base Oil>

(Compound Represented by General Formula (1))

The base oil contains a compound (synthetic oil) represented by General Formula (1) below.

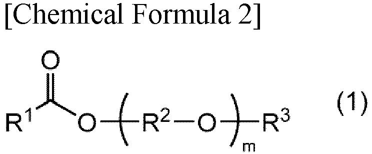

In Formula (1), m represents an integer from 2 to 6.

R¹ represents an alkyl group having 1 to 8 carbon atoms or an alkenyl group having 2 to 8 carbon atoms.

R² represents an alkylene group having 1 to 4 carbon atoms. A plurality of R² groups may be the same as or different from each other.

R³ represents a hydrogen atom, an alkyl group having 1 to 8 carbon atoms, or a -(CO)R⁴ group. R⁴ represents an alkyl group having 1 to 8 carbon atoms or an alkenyl group having 2 to 8 carbon atoms.

m is preferably 2 to 4, more preferably 2 or 3, still more preferably 2, since the cooling performance is superior.

The alkyl group represented by R¹ may be any of a linear alkyl group, a branched alkyl group, or a cyclic alkyl group. The number of carbon atoms of the alkyl group is preferably 1 to 4, more preferably 1 or 2, and still more preferably 1, since the cooling performance is superior with a lower number of carbon atoms. A hydrogen atom contained in the alkyl group may be substituted with a substituent.

Examples of the alkyl group include linear alkyl groups such as a methyl group, an ethyl group, an n-propyl group, an n-butyl group, an n-hexyl group, and an n-octyl group; branched alkyl groups such as an iso-propyl group, an iso-butyl group, a sec-butyl group, a tert-butyl group, and a 2-ethylhexyl group; and cyclic alkyl groups such as a cyclopentyl group and a cyclohexyl group. Among them, the alkyl group is preferably a methyl group, an ethyl group, or an iso-propyl group, more preferably a methyl group, because of superior cooling performance.

The alkenyl group represented by R¹ may be either a linear alkenyl group or a branched alkenyl group. The number of carbon atoms of the alkenyl group is preferably 2 to 4, more preferably 2 or 3, and still more preferably 2, since the cooling performance is superior with a lower number of carbon atoms. A hydrogen atom contained in the alkenyl group may be substituted with a substituent.

Examples of the alkenyl group include an ethenyl group (vinyl group), a propenyl group (such as a 1-propenyl group, a 2-propenyl group (allyl group), and an iso-propenyl group), a butenyl group (such as a 1-butenyl group, a 2-butenyl group, and a 3-butenyl group), a pentenyl group (such as a 1-pentenyl group, a 2-pentenyl group, a 3-pentenyl group, and a 4-pentenyl group), a hexenyl group (such as a 1-hexenyl group and a 5-hexenyl group), a heptenyl group (such as a 1-heptenyl group and a 6-heptenyl group), and an octenyl group (such as a 1-octenyl group and a 7-octenyl group). When geometrical isomers of the alkenyl group are present, either a cis isomer or a trans isomer can be used. Among them, the alkenyl group is preferably an ethenyl group (vinyl group) or an iso-propenyl group because the cooling performance is superior.

The alkylene group represented by R² may be either a linear alkylene group or a branched alkylene group. The number of carbon atoms of the alkylene group is preferably 2 or 3, more preferably 2, since the cooling performance is superior. A hydrogen atom contained in the alkylene group may be substituted with a substituent.

Examples of the alkylene group include a methylene group, an ethylene group, a linear or branched propylene group, and a linear or branched butylene group. Among them, the alkylene group is preferably an ethylene group or a propylene group, more preferably an ethylene group, because the cooling performance is superior.

R³ is a hydrogen atom, an alkyl group having 1 to 8 carbon atoms, or a -(CO)R⁴ group, and preferably an alkyl group having 1 to 8 carbon atoms or a -(CO)R⁴ group due to better insulation properties, and more preferably an alkyl group having 1 to 8 carbon atoms due to better cooling performance.

Examples of the alkyl group represented by R³ include the same groups as the alkyl group represented by R¹. The alkyl group represented by R³ is preferably a methyl group, an ethyl group, an n-propyl group, an iso-propyl group, an n-butyl group, an iso-butyl group, or a tert-butyl group, and more preferably an ethyl group, an n-propyl group, an iso-propyl group, or an n-butyl group, because of superior cooling performance.

Examples of the alkyl group represented by R⁴ in the -(CO)R⁴ group represented by R³ include the same alkyl groups as the alkyl group represented by R¹. The number of carbon atoms of the alkyl group represented by R⁴ is preferably 1 to 6, more preferably 1 to 4, and still more preferably 2 to 4, since the cooling performance is superior with a lower number of carbon atoms.

Examples of the alkenyl group represented by R⁴ in the -(CO)R⁴ group represented by R³ include the same groups as the alkenyl group represented by R¹. A preferable embodiment of the alkenyl group represented by R⁴ may be the same as that of the alkenyl group represented by R¹.

When R¹ and R⁴ coexist, R¹ and R⁴ may be the same or different, but it is preferable that R¹ and R⁴ are the same from the viewpoint of synthesis. R¹ and R⁴ are each preferably a methyl group, an ethyl group, an iso-propyl group, an ethenyl group, or an iso-propenyl group.

The total number of carbon atoms contained in the molecule of the compound represented by General Formula (1) is preferably 6 to 12, more preferably 7 to 11, and still more preferably 8 to 10, since a better balance between cooling performance and safety can be achieved.

The molecular weight of the compound represented by General Formula (1) is preferably 120 or more, more preferably 140 or more, still more preferably 160 or more, and preferably 400 or less, more preferably 300 or less, and still more preferably 250 or less. When the molecular weight of the compound represented by General Formula (1) is 120 or more, the flash point tends to be sufficiently high, and thus safety tends to be superior. When the molecular weight of the compound represented by General Formula (1) is 400 or less, the viscosity can be prevented from becoming excessively high, and the cooling performance tends to be superior.

Specific examples of the compound represented by General Formula (1) include compounds represented by the formulas (1-1a) to (1-1n), the formulas (1-2a) to (1-2y), and the formulas (1-3a) to (1-3e) below. The compound represented by General Formula (1) is preferably a compound represented by any one of Formulas (1-1a) to (1-1g) or Formulas (1-2a) to (1-2y) from the viewpoint of synthesis, more preferably a compound represented by any one of Formulas (1-1a) to (1-1f), Formulas (1-2a) to (1-2f), or Formulas (1-2h) to (1-2y), in which R³ is not a hydrogen atom, because of better insulation properties, still more preferably a compound represented by Formula (1-1b), Formula (1-2b), Formula (1-2c), Formula (1-2d), Formula (1-2e), or Formula (1-2i), in which the total number of carbon atoms contained in the molecule is 8 to 10, because of a better balance between cooling performance and safety.

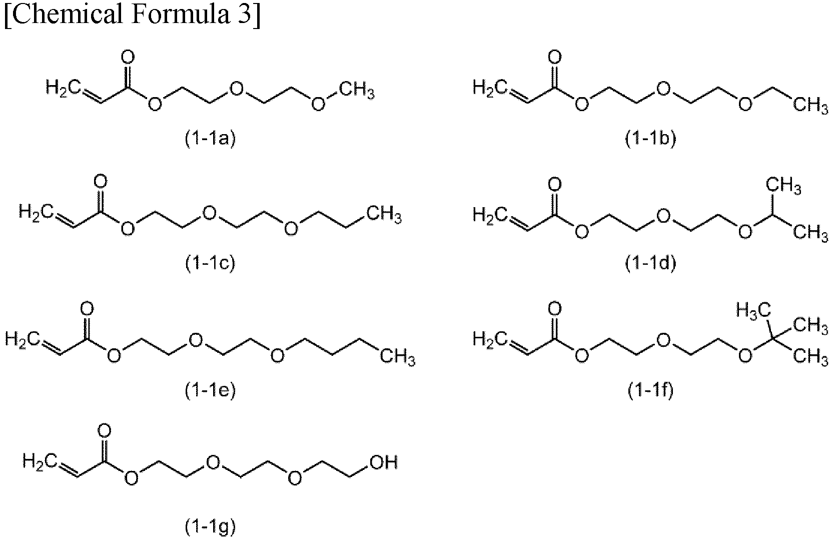

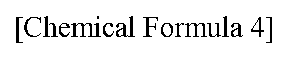

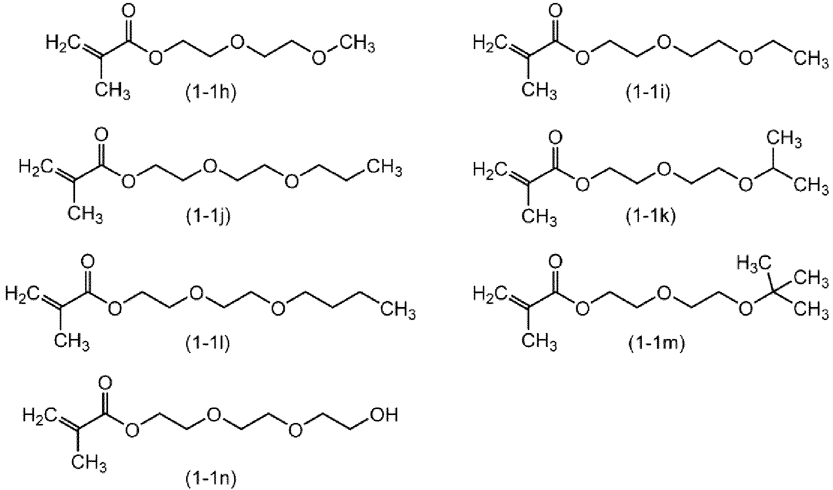

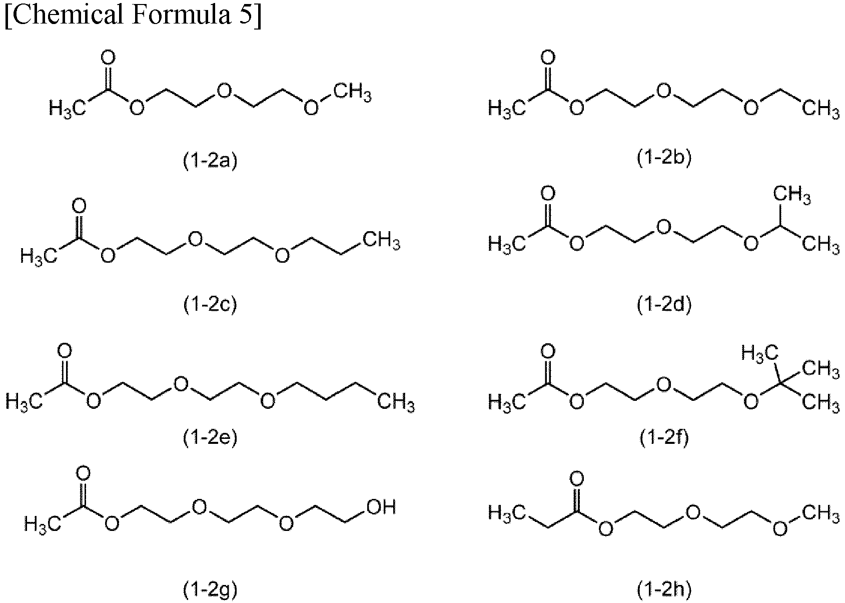

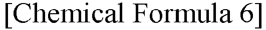

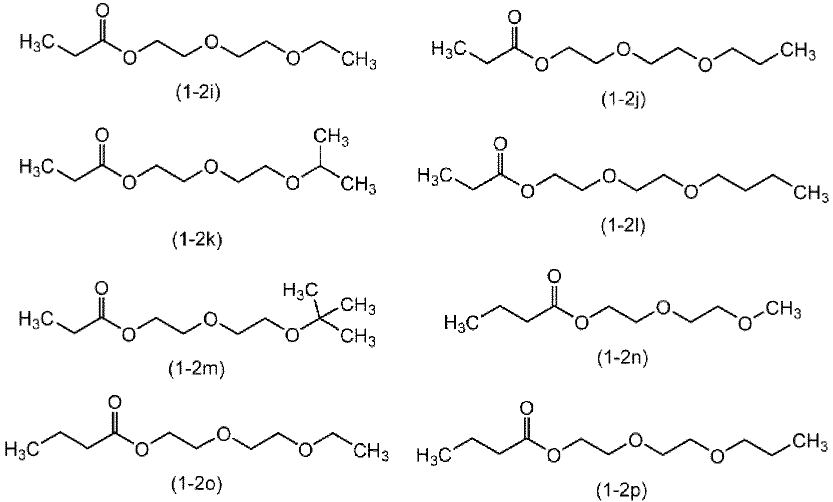

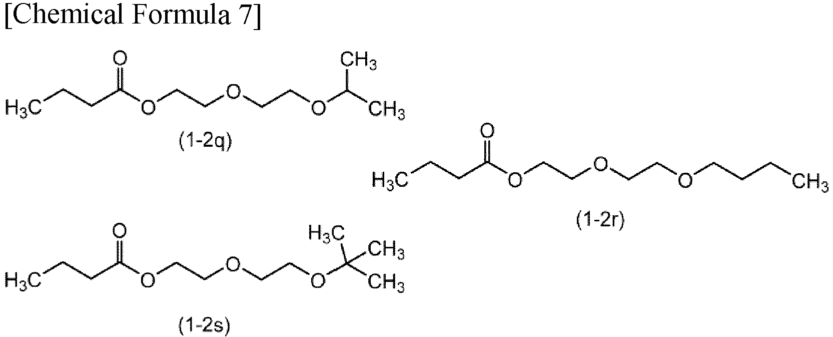

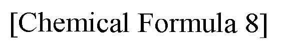

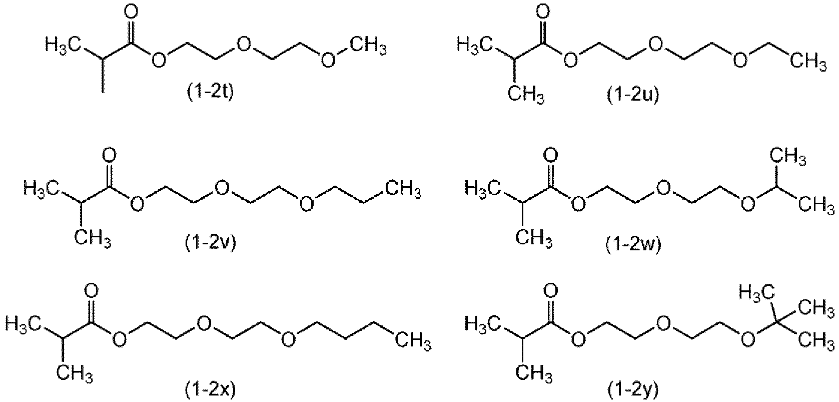

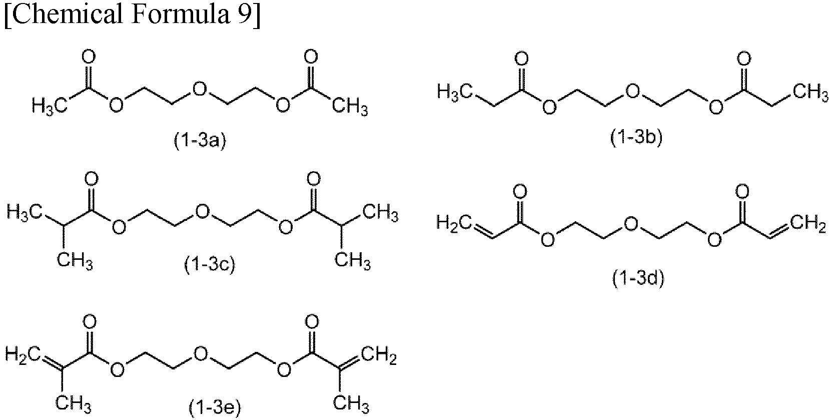

The compound represented by General Formula (1) can be obtained, for example, by dehydration condensation of a compound represented by General Formula (1a) and a compound represented by General Formula (1b).

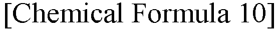

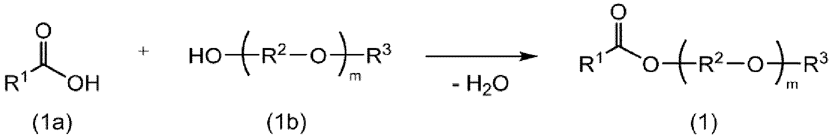

m, R¹, R², and R³ in Formula (1a) and Formula (1b) have the same meaning as m, R¹, R², and R³ in Formula (1).

The content of the compound represented by General Formula (1) is, based on the total amount of the base oil, preferably 50 mass% or more, more preferably 70 mass% or more, still more preferably 90 mass% or more, and particularly preferably 95 mass% or more. The content of the compound represented by General Formula (1) may be 100 mass% or less based on the total amount of the base oil. The content of the compound represented by General Formula (1) may be 100 mass% based on the total amount of the base oil. That is, the base oil may be composed of a compound represented by General Formula (1).

### (Base Oil Except Compound Represented by General Formula (1))

Examples of base oils (hereinafter may be referred to as "other base oils") other than the compound represented by General Formula (1) include mineral oils and synthetic oils.

Examples of the mineral oils include a paraffinic base oil and a naphthenic base oil obtained by appropriately combining and applying one or more purification means such as solvent deasphalting, solvent extraction, solvent dewaxing, contact dewaxing, hydrorefining, sulfuric acid washing, and clay treatment to a lubricating oil fraction obtained by distillation of crude oil under atmospheric pressure or under reduced pressure. Mineral oils of Group II of the API base oil classification and mineral oils of Group III of the API base oil classification are usually produced through a hydrorefining process. Examples of the mineral oil include wax isomerized base oils, and base oils produced by a method of isomerizing GTL wax (gas-to-liquid wax).

Examples of the synthetic oil include poly-α-olefins, various esters (excluding the compound represented by General Formula (1)), various ethers, alkylbenzenes, alkylnaphthalenes, polyoxyalkylene glycols (excluding the compound represented by General Formula (1)), fluorine-containing compounds, silicone oils, and derivatives thereof.

The content of the other base oil is preferably 50 mass% or less, more preferably 30 mass% or less, still more preferably 10 mass% or less, and particularly preferably 5 mass% or less, based on the total amount of the base oil. The content of the other base oil may be 0 mass% or more based on the total amount of the base oils. The content of the other base oil may be 0 mass% based on the total amount of the base oil.

The flash point of the base oil (or the compound represented by General Formula (1)) is preferably 90°C or higher, more preferably 100°C or higher, still more preferably 105°C or higher, and particularly preferably 120°C or higher from the viewpoint of safety. The flash point of the base oil may be, for example, 200°C or lower. In the present specification, the flash point of a base oil means a value measured by the Cleveland open cup method (COC method) in accordance with JIS K 2265-4: 2007.

The kinematic viscosity of the base oil (or the compound represented by General Formula (1)) at 40°C is preferably 4.00 mm²/s or less, more preferably 3.50 mm²/s or less, still more preferably 3.00 mm²/s or less, particularly preferably 2.50 mm²/s or less, most preferably 2.00 mm²/s or less, since the cooling performance is superior with a lower kinematic viscosity. The kinematic viscosity of the base oil at 40°C may be, for example, 1.00 mm²/s or more or 1.20 mm²/s or more. In the present specification, the kinematic viscosity of the base oil at 40°C means a value measured in accordance with JIS K 2283: 2000.

The absolute viscosity of the base oil (or the compound represented by General Formula (1)) at 25°C is preferably 10.00 mPa·s or less, more preferably 8.00 mPa·s or less, still more preferably 6.00 mPa·s or less, particularly preferably 5.00 mPa·s or less, most preferably 4.00 mPa·s or less because of superior cooling performance. The absolute viscosity of the base oil at 25°C may be, for example, 1.00 mPa·s or more or 1.50 mPa·s or more. In the present specification, the absolute viscosity of the base oil at 25°C refers to a value calculated as the product of the kinematic viscosity (mm²/s) at 25°C and the density (g/cm³) at 25°C. The kinematic viscosity of the base oil at 25°C refers to a value measured in accordance with JIS K 2283: 2000.

The thermal conductivity of the base oil (or the compound represented by General Formula (1)) at 25°C is preferably 0.135 W/m·K or more, more preferably 0.140 W/m·K or more, still more preferably 0.145 W/m·K or more, particularly preferably 0.150 W/m·K or more, and most preferably 0.155 W/m·K or more, since the cooling performance is superior with higher thermal conductivity. The thermal conductivity of the base oil at 25°C may be, for example, 0.165 W/m·K or less. In the present specification, the thermal conductivity of the base oil at 25°C refers to a value measured with a thermal conductivity meter (such as KD2 Pro (manufactured by Decagon Devices, Inc.)) in accordance with ASTM D5334.

The density of the base oil (or the compound represented by General Formula (1)) at 25°C is preferably 0.850 g/cm³ or more, more preferably 0.900 g/cm³ or more, still more preferably 0.950 g/cm³ or more, particularly preferably 0.980 g/cm3 or more, most preferably 1.000 g/cm³ or more, since the cooling performance is superior with a higher density. The density of the base oil at 25°C may be, for example, 1.200 g/cm³ or less. In the present specification, the density of the base oil at 25°C refers to a value measured in accordance with JIS K 2249-1: 2011.

The specific heat of the base oil (or the compound represented by General Formula (1)) at 25°C is preferably 1.60 J/g·K or more, more preferably 1.70 J/g·K or more, still more preferably 1.80 J/g·K or more, particularly preferably 1.90 J/g·K or more, and most preferably 1.95 J/g·K or more, since the cooling performance is superior with a higher specific heat. The specific heat of the base oil at 25°C may be, for example, 2.20 J/g·K or less. In the present specification, the specific heat of the base oil at 25°C refers to a value measured using a differential scanning calorimeter in accordance with JIS K 7123: 2012.

The volume resistivity of the base oil (or the compound represented by General Formula (1)) at 25°C is preferably 1.00 × 10⁵ Ω·m or more, more preferably 1.00 × 10⁶ Ω·m or more, still more preferably 1.00 × 10⁷ Ω·m or more, particularly preferably 1.00 × 10⁸ Ω·m or more, most preferably 5.00 × 10⁸ Ω·m or more, since the electrical insulation properties are superior. The volume resistivity of the base oil at 25°C may be, for example, 1.00 × 10¹⁰ Ω·m or less. In the present specification, the volume resistivity of the base oil at 25°C refers to a value measured under the conditions of a measurement temperature of 25°C and an applied voltage of 250 V in accordance with JIS C 2101: 1999.

The pour point of the base oil (or the compound represented by General Formula (1)) is preferably -20°C or lower, more preferably - 30°C or lower, still more preferably -40°C or lower, and particularly preferably -45°C or lower, since the handleability at low temperatures is superior. In the present specification, the pour point of the base oil means a value measured in accordance with JIS K 2269: 1987.

The FOM (figure of merit) of the base oil (or the compound represented by General Formula (1)) is preferably greater than 0.010, more preferably 0.015 or more, still more preferably 0.020 or more, particularly preferably 0.025 or more, most preferably 0.030 or more, since the cooling performance is superior. In the present specification, the FOM of the base oil refers to a value calculated in accordance with the following formula based on Annual Review of Heat Transfer 2012, 15, 93-129. FOM = [(density (g/cm3) at 25°C)2 × (thermal conductivity (W/m·K) at 25°C)1.8 × (specific heat (J/g·K) at 25°C)1.6]/(absolute viscosity (mPa·s) at 25°C)1.4

The content of the base oil is, based on the total amount of the cooling oil composition, preferably 80 mass% or more, more preferably 85 mass% or more, still more preferably 90 mass% or more, and particularly preferably 95 mass% or more. The content of the base oil may be 100 mass% or less based on the total amount of the cooling oil composition. The content of the base oil may be 100 mass% based on the total amount of the cooling oil composition. That is, the cooling oil composition may be composed of a base oil.

### <Additive>

The cooling oil composition of the present embodiment may further contain additives such as an anti-wear agent, an antioxidant, a viscosity modifier, a rust inhibitor, a metal deactivator, an antifoaming agent, a dispersant, and a friction modifier as necessary, as long as the effects of the present invention are not impaired. The content of the additives is, based on the total amount of the cooling oil composition, preferably 0 to 20 mass%, more preferably 0 to 15 mass%, still more preferably 0 to 10 mass%, and particularly preferably 0 to 5 mass%.

Examples of the anti-wear agent include known phosphorus-based, sulfur-based, or phosphorus-sulfur-based anti-wear agents such as phosphite esters, thiophosphite esters, dithiophosphite esters, trithiophosphite esters, phosphate esters, thiophosphate esters, dithiophosphate esters, trithiophosphate esters, amine salts thereof, metal salts thereof, derivatives thereof, thiadiazole compounds, sulfurized fats and oils, sulfurized fatty acids, sulfurized esters, sulfurized olefins, dihydrocarbyl (poly)sulfides, alkylthiocarbamoyl compounds, thiocarbamate compounds, thioterpene compounds, dialkyl thiodipropionate compounds, sulfurized mineral oils, and zinc dithiocarbamates.

Examples of the antioxidant include ashless antioxidants such as phenol-based (hindered phenol-based) compounds and amine-based compounds, and metal-based antioxidants such as copper-based compounds and molybdenum-based compounds.

Examples of the viscosity modifier include polymethacrylate, dispersion type polymethacrylate, olefin-based copolymers (such as an ethylene-propylene copolymer), dispersion type olefin-based copolymers, styrene-based copolymers (such as a styrene-butadiene copolymer or a styrene-isoprene copolymer).

Examples of the rust inhibitor include fatty acids, alkenyl succinate half esters, fatty acid soaps, alkyl sulfonate salts, polyhydric alcohol fatty acid esters, fatty acid amides, oxidized paraffins, and alkyl polyoxyethylene ethers.

Examples of the metal deactivator include benzotriazole, triazole derivatives, benzotriazole derivatives, and thiadiazole derivatives.

Examples of the antifoaming agent include silicone-based compounds such as dimethylpolysiloxane, and polyacrylate.

Examples of the dispersant include succinimide compounds, boron-based imide compounds, and acid amide-based compounds.

Examples of the friction modifier include ashless friction modifiers such as ester-based, amine-based, amide-based, and glycol-based friction modifiers, and metal-based friction modifiers such as molybdenum dithiocarbamate (MoDTC) and molybdenum dithiophosphate (MoDTP).

### <Cooling Oil Composition>

Suitable ranges of the flash point, the kinematic viscosity at 40°C, the absolute viscosity at 25°C, the thermal conductivity at 25°C, the density at 25°C, the specific heat at 25°C, the volume resistivity at 25°C, and the pour point of the cooling oil composition may be the same as the suitable ranges of the flash point, the kinematic viscosity at 40°C, the absolute viscosity at 25°C, the thermal conductivity at 25°C, the density at 25°C, the specific heat at 25°C, the volume resistivity at 25°C, and the pour point of the base oil.

The cooling oil composition (lubricating oil composition) may be used for cooling a device for an electric vehicle. For example, the cooling oil composition can cool the device for an electric vehicle while lubricating the device for an electric vehicle if the cooling oil composition circulates through the device for an electric vehicle. Here, examples of the device for an electric vehicle include a motor, a generator, a storage battery, a converter, an inverter, an engine, and a transmission. The device for an electric vehicle is preferably at least one selected from the group consisting of a motor, a generator, a storage battery, a converter, an inverter, an engine, and a transmission.

The cooling oil composition can be obtained, for example, by a production method including a step of preparing a base oil containing the compound represented by General Formula (1). The method for producing the cooling oil composition may include a step of mixing additives. The additives may be compounded in any manner, and the order of compounding and the method thereof are not limited.

### [Cooling System]

A cooling system according to an embodiment is for cooling a device for an electric vehicle, a computer, other electronic equipment, and the like, and includes the above-described cooling oil composition. The device for an electric vehicle is preferably at least one selected from the group consisting of a motor, a generator, a storage battery, a converter, an inverter, an engine, and a transmission.

The cooling system includes a circulation unit through which the cooling oil composition circulates, and a part to be cooled. The part to be cooled is a device for an electric vehicle. The cooling method in the part to be cooled may be either a direct cooling method or an indirect cooling method, and is appropriately set according to the cooling method required for the device for an electric vehicle. The cooling system may further include a supply unit that supplies the cooling oil composition to the part to be cooled via the circulation unit. The cooling system may further include a sensor unit that detects the temperature of the part to be cooled, and a controller that controls the operation of the supply unit according to the temperature detected by the sensor unit.

### Examples

Hereinafter, the present invention will be specifically described with reference to examples, but the present invention is not limited thereto.

### (Examples 1 to 3 and Comparative Examples 1 to 4)

### [Preparation of Cooling Oil Composition]

Using the compounds (base oils) shown below, cooling oil compositions of Examples 1 to 3 and Comparative Examples 1 to 4 composed only of the compounds (base oils) shown in Table 1 (unit: part by mass) were prepared.

### <Compound Represented by General Formula (1)>

- Compound represented by Formula (1-1b) (Compound 1-1b) (Tokyo Chemical Industry Co., Ltd.) 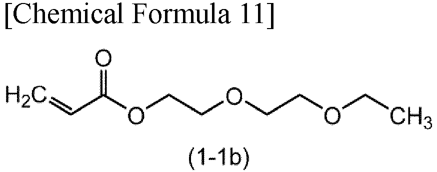
- Compound represented by Formula (1-2b) (Compound 1-2b) (Merck KGaA) 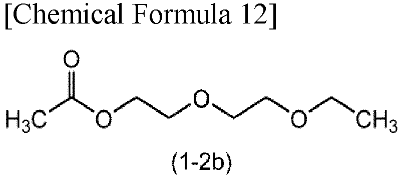
- Compound represented by Formula (1-2e) (Compound 1-2e) (Tokyo Chemical Industry Co., Ltd.)

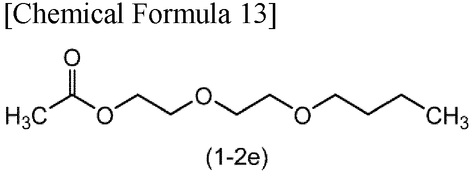

### <Compound (Compound (2)) Except Compound Represented by General Formula (1)>

- Compound represented by Formula (2-1) (Compound 2-1) (Tokyo Chemical Industry Co., Ltd.) 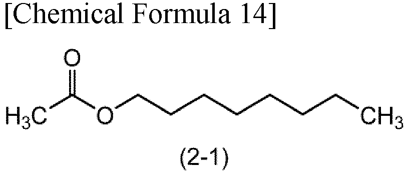
- Compound represented by Formula (2-2) (Compound 2-2) (Tokyo Chemical Industry Co., Ltd.) 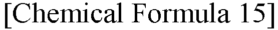 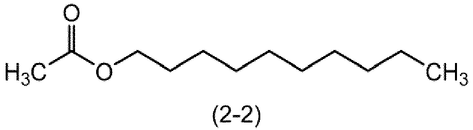
- Compound represented by Formula (2-3) (Compound 2-3) (Tokyo Chemical Industry Co., Ltd.) 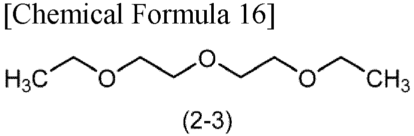
- Compound represented by Formula (2-4) (Compound 2-4) (Tokyo Chemical Industry Co., Ltd.)

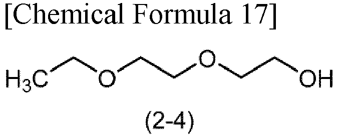

### [Properties of Cooling Oil Composition]

The properties of the cooling oil compositions of Examples 1 to 3 and Comparative Examples 1 to 4 were measured according to the following methods. The results are shown in Table 1. In the present examples, since the study was conducted without adding additives other than the base oil, each property of the cooling oil composition is also the property of the base oil (or the compound represented by General Formula (1) or General Formula (2)).

### (A) Flash Point

The flash point was measured by the Cleveland open cup method (COC method) in accordance with JIS K 2265-4: 2007.

### (B) Kinematic Viscosity at 40°C

The kinematic viscosity at 40°C was measured in accordance with JIS K 2283: 2000.

### (C) Absolute Viscosity at 25°C

The absolute viscosity at 25°C was calculated from the product of the kinematic viscosity (mm²/s) at 25°C and the density (g/cm³) at 25°C. The kinematic viscosity at 25°C was measured in accordance with JIS K 2283: 2000.

### (D) Thermal Conductivity at 25°C

The thermal conductivity at 25°C was measured with a thermal conductivity meter (KD2 Pro (manufactured by Decagon Devices, Inc.)).

### (E) Density at 25°C

The density at 25°C was measured in accordance with JIS K 2249-1: 2011.

### (F) Specific Heat at 25°C

The specific heat at 25°C was measured with a differential scanning calorimeter in accordance with JIS K 7123: 2012.

### (G) Volume Resistivity at 25°C

The volume resistivity at 25°C was measured under the conditions of a measurement temperature of 25°C and an applied voltage of 250 V in accordance with JIS C 2101: 1999 to evaluate the electrical insulation properties.

### (H) Pour Point

The pour point was measured in accordance with JIS K 2269: 1987 to evaluate the low-temperature fluidity.

### (I) FOM (Figure of Merit)

The FOM was calculated according to the following formula on the basis of Annual Review of Heat Transfer 2012, 15, 93-129 to evaluate the cooling performance. FOM = [(density (g/cm3) at 25°C)2 × (thermal conductivity (W/m·K) at 25°C)1.8 × (specific heat (J/g·K) at 25°C)1.6]/(absolute viscosity (mPa·s) at 25°C)14

### [Evaluation of Cooling Oil Composition]

In the present examples, a cooling oil composition having an FOM of more than 0.010, a volume resistivity at 25°C of 0.001 × 10⁸ Ω·m or more, a pour point of -20°C or lower, and a flash point of 90°C or higher was judged to be acceptable.

**[Table 1]**

| | | Exam. 1 | Exam. 2 | Exam. 3 | Comp. Exam. 1 | Comp. Exam. 2 | Comp. Exam. 3 | Comp. Exam. 4 |
|---|---|---|---|---|---|---|---|---|
| Base oil | Compound 1-1b | 100 | - | - | - | - | - | - |
| | Compound 1-2b | - | 100 | - | - | - | - | - |
| | Compound 1-2e | - | - | 100 | - | - | - | - |
| | Compound 2-1 | - | - | - | 100 | - | - | - |
| | Compound 2-2 | - | - | - | - | 100 | - | - |
| | Compound 2-3 | - | - | - | - | - | 100 | - |
| | Compound 2-4 | - | - | - | - | - | - | 100 |
| Flash point (°C) | | 108 | 104 | 126 | 88 | 118 | 72 | 95 |
| Kinematic viscosity at 40°C (mm²/s) | | 2.11 | 1.79 | 2.23 | 1.45 | 2.86 | 1.10 | 2.66 |
| Absolute viscosity at 25°C (mPa·s) | | 3.01 | 2.31 | 3.03 | 1.65 | 2.46 | 1.24 | 3.77 |
| Thermal conductivity at 25°C (W/m·K) | | 0.151 | 0.158 | 0.149 | 0.135 | 0.136 | 0.166 | 0.160 |
| Density at 25°C (g/cm³) | | 1.01 | 1.00 | 0.97 | 0.86 | 0.86 | 0.90 | 0.98 |
| Specific heat at 25°C (J/g·K) | | 1.99 | 1.98 | 1.99 | 1.52 | 1.44 | 1.03 | 2.41 |
| Volume resistivity at 25°C (10⁸ Ω·m) | | 0.014 | 5.1 | 19 | 370 | 260 | 4.5 | 0.0001 or lower |
| Pour point (°C) | | -45 or lower | -45 or lower | -45 or lower | -42.5 | -15 | -45 or lower | -45 or lower |
| FOM | | 0.022 | 0.033 | 0.020 | 0.020 | 0.010 | 0.025 | 0.023 |

As shown is Table 1, the cooling oil compositions of Example 1 to 3 satisfied the acceptability criteria, whereas the cooling oil compositions of Comparative Examples 1 to 4 did not satisfy the acceptability criteria. From these results, it was confirmed that the cooling oil composition of the present invention combines high levels of cooling performance, electrical insulation properties, low-temperature fluidity, and safety.

## Claims

1. A cooling oil composition comprising a base oil containing a compound represented by General Formula (1) below: 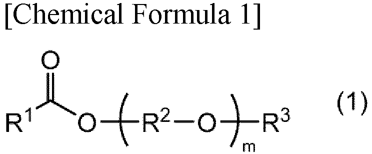
wherein, in Formula (1), m represents an integer of 2 to 6,
R¹ represents an alkyl group having 1 to 8 carbon atoms or an alkenyl group having 2 to 8 carbon atoms,
R² represents an alkylene group having 1 to 4 carbon atoms, a plurality of R² groups may be the same as or different from each other,
R³ represents a hydrogen atom, an alkyl group having 1 to 8 carbon atoms, or a -(CO)R⁴ group, and R⁴ represents an alkyl group having 1 to 8 carbon atoms or an alkenyl group having 2 to 8 carbon atoms.

2. The cooling oil composition according to claim 1, wherein m is 2, and R² is an ethylene group.

3. The cooling oil composition according to claim 1 or 2, used for cooling a device for an electric vehicle.

4. A cooling system for cooling a device for an electric vehicle, comprising the cooling oil composition according to claim 1 or 2.
